# EUROPEAN PATENT SPECIFICATION

(11) **EP 2 904 751 B1**
(45) Date of publication and mention of the grant of the patent: **26.01.2022**
(21) Application number: 12773283.2
(22) Date of filing: 01.10.2012
(51) Int. Cl.: H04L 12/24, H04L 12/26, H04L 12/911, H04L 12/927

(54) **EVENT BASED QUALITY OF SERVICE ADJUSTMENT**
EREIGNISBASIERTE ANPASSUNG DER SERVICEQUALITÄT
ADAPTATION DE LA QUALITÉ DE SERVICE BASÉE SUR UN ÉVÉNEMENT

(43) Date of publication of application: 12.08.2015
(73) Proprietor: Nokia Solutions and Networks Oy, 02610 Espoo (FI)
(72) Inventor: BELLING, Thomas, 85435 Erding (DE)
(74) Representative: Nokia EPO representatives
(86) International application number: PCT/EP2012/069335
(87) International publication number: WO 2014/053154

(56) References cited:
- WO-A1-2004/021206
- WO-A1-2011/039293
- WO-A1-2011/120378
- US-A1- 2003 152 096
- US-A1- 2010 142 373
- US-B1- 6 771 661

## Description

### Field

The present invention relates to event based quality of service adjustment. More specifically, the present invention exemplarily relates to measures (including methods, apparatuses and computer program products) for realizing event based quality of service adjustment.

### Background

The present specification generally relates to implementation of control rules for controlling processing of data traffic (i.e. user plane traffic) in network deployments. More particular, the present specification relates to policy and charging control (PCC) as well as quality of service (QoS) control of a 3^{rd} Generation Partnership Project (3GPP) network deployment.

3GPP specifications specify PCC over the Gx reference point between the policy and charging control function (PCRF) and the policy and charging enforcement function (PCEF) and over the Gxx reference point between the PCRF and the bearer binding and event reporting function (BBERF). PCRF and BBERF handle user plane traffic according to the instructions received from the PCRF.

PCC rules allow the PCRF to instruct the PCEF to:
- detect received user-plane internet protocol (IP) packets belonging to a certain service data flow, i.e. IP packets passed between provided IP addresses and ports, and with provided IP-level protocol such as user datagram protocol (UDP) or transmission control protocol (TCP),
- collect charging information for a certain service data flow,
- interact with an online charging system (OCS) for online charging of a certain service data flow,
- perform control of used QoS class and bandwidth for a certain service data flow,
- reserve transport resources (IP connectivity access network (IP-CAN) bearers) with suitable QoS class and bandwidth for a certain service data flow,
- select an IP-CAN bearer with a suitable QoS class for a certain downlink service data flow,
- pass or discard packets belonging to a certain service data flow, which is also known as gating, and to
- provide usage monitoring for an entire group of PCC rules.

There are so-called static PCC rules, which are provided via configuration at the PCEF. Those static PCC rules are either always active, or can only be activated or deactivated by the PCRF by addressing the respective PCC rules by a name configured at both the PCRF and PCEF. Such static PCC rules can use extended/deep packet inspection based filtering (inspection of protocol layers transported within the IP) instead of filtering for service data flows, i.e. filtering for IP addresses and ports to detect service data flows.

Further, QoS rules allow the PCRF to instruct the BBERF to:
- detect received user-plane IP packets belonging to a certain service data flow, i.e. IP packets passed between provided IP addresses and ports, and with provided IP-level protocol such as UDP or TCP,
- control of used QoS class and bandwidth for a certain service data flow,
- reserve transport resources (IP-CAN bearers) with suitable QoS class and bandwidth for a certain service data flow, and to
- select an IP-CAN bearer with a suitable QoS class for a certain downlink service data flow.

There are so-called static QoS rules, which are provided via configuration at the BBERF. Static QoS rules are either always active, or can only be activated or deactivated by the PCRF by addressing them by a name configured at both the PCRF and BBERF.

PCC rules and/or QoS rules involve a reservation of QoS. For higher QoS classes a guaranteed bit rate (GBR) is reserved for a certain service data flow. The GBR includes a costly reservation of radio resources. According to current standards, the resources are reserved for the entire duration a PCC rule or QoS rule, respectively, is installed. However, it is desirable that those resources are only reserved while the certain service data flow is active.

Hence, the problem arises that there may be costly bandwidth reserved based on such PCC rules or QoS rules which is unused, if the respective rule is installed and no traffic corresponding to the respective rule occurs, i.e. a service data flow corresponding to the respective rule is not active.

Further, it was originally envisioned that resources of higher QoS classes are only reserved by the PCRF when it is informed by an application function (AF), that the related service is active. For instance, in an IP multimedia subsystem (IMS), a proxy call session control function (P-CSCF) can act as the AF and informs the PCRF about ongoing services negotiated via session initiation protocol (SIP) signalling. However, many applications are frequently not provided by the IMS or AFs under the control of the network operator.

Hence, the problem arises that in many cases no AF-provided information whether a service is ongoing is available, such that resources of higher QoS would be reserved only in a fraction of cases in which it might be suitable. For instance, streamed video would benefit from a guaranteed bit rate transport, but is frequently provided by third parties in the internet but not by the operator.

Furthermore, extended/deep packet inspection is performed either in the PCEF or in a separate traffic detection function (TDF) and is using application detection and control (ADC) rules. For such extended/deep packet inspection, the PCRF obtains a notification containing information about related service data flows, when an application is detected via extended/deep packet inspection by the PCEF or the TDF. Subsequently, the PCRF installs PCC rules matching those service data flows.

Consequently, such behaviour results in additional load on the PCRF and its signalling interface with the network entity performing the ADC.

Hence, the further problem arises that such an approach is not suitable for applications using many short-lived service data flows (typically for short-lived TCP connections). For instance, for web browsing or hypertext transfer protocol (HTTP) based video streaming, the resulting load on the PCRF and the signalling interface with the PCEF would become too high, which might influence the further operation of the PCRF and/or the PCEF. Further, in such scenario it might become necessary to perform IP CAN bearer modification to pass related filter information to an involved user equipment (UE).

Hence, there is a need to provide for event based quality of service adjustment. Further prior art can be found in document US 6 771 661 B1, disclosing an apparatus and methods for providing an event-based data communications device configuration. In particular, a method for controlling bandwidth allocation within a data communications device according to this document comprises the steps of receiving bandwidth allocation information indicating future bandwidth allocation modification information associated with a session of data communication, determining a future event upon the occurrence of which the data communications device will modify an amount of bandwidth allocated to the session of data communication, wherein the future event is determined based upon the future bandwidth allocation modification information, detecting the occurrence of the future event, and, in response to said detecting, modifying the amount of bandwidth allocated to the session of data communications. In addition, document WO 2004/021 206 A1 discloses a switch implementing packet policies for specifying actions to be performed in response to receiving data packets.

### Summary

Various exemplary embodiments of the present invention aim at addressing at least part of the above issues and/or problems and drawbacks.

Various aspects of exemplary embodiments of the present invention are set out in the appended claims.

*In particular, the above mentioned objects are achieved by aspects of the present invention defined in the appended independent claims. Advantageous modifications thereof are set forth in the appended dependent claims.*

Any one of the above aspects enables an efficient avoidance of unnecessary reservation of radio resources to thereby solve at least part of the problems and drawbacks identified in relation to the prior art.

By way of exemplary embodiments of the present invention, there is provided event based quality of service adjustment. More specifically, by way of exemplary embodiments of the present invention, there are provided measures and mechanisms for realizing event based quality of service adjustment.

Thus, improvement is achieved by methods, apparatuses and computer program products enabling/realizing event based quality of service adjustment.

### Brief description of the drawings

In the following, the present invention will be described in greater detail by way of non-limiting examples with reference to the accompanying drawings, in which
Figure 1 is a block diagram illustrating an apparatus according to exemplary embodiments of the present invention,
Figure 2 is a block diagram illustrating an apparatus according to exemplary embodiments of the present invention,
Figure 3 is a schematic diagram of a procedure according to exemplary embodiments of the present invention,
Figure 4 is a schematic diagram of a procedure according to exemplary embodiments of the present invention, and
Figure 5 is a block diagram alternatively illustrating apparatuses according to exemplary embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. In particular, charging and service quality related control is used as a non-limiting example for the applicability of thus described exemplary embodiments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) event based quality of service adjustment.

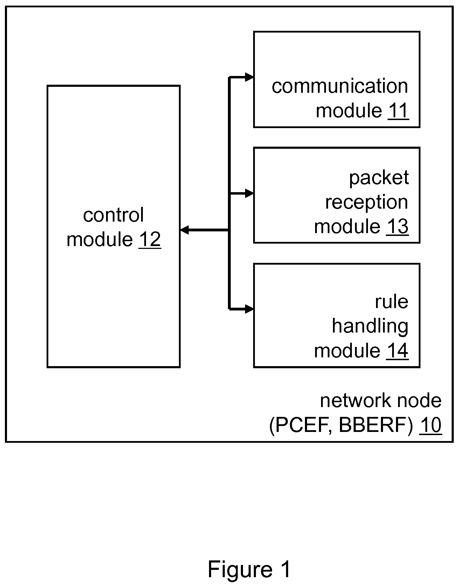

Figure 1 is a block diagram illustrating an apparatus according to exemplary embodiments of the present invention.

As shown in Figure 1, according to exemplary embodiments of the present invention, the apparatus is a network node 10 (e.g. a PCEF or BBERF) comprising a communication module 11, a control module 12, a packet reception module 13, and a rule handling module 14. While the communication module 11 may communicate in a network, the control module 12 applies a traffic management rule (e.g. a PCC rule or a QoS rule) comprising a filter and first quality of service settings including a bandwidth amount. Subsequently, the packet reception module 13 receives a data packet of a service data flow. The rule handling module 14 matches said data packet with said filter.

Based on a matching result, the control module 12 reserves, based on said bandwidth amount, bandwidth resources for a transport connection associated with said service data flow.

In other words, when the first packet matching the filters of an installed PCC rule or QoS rule is detected by the PCEF or BBERF, the PCEF or BBERF allocates bandwidth for the IP-CAN transport connection.

According to exemplary embodiments of the present invention, the application of said traffic management rule can be performed in several ways.

As one option, the control module 12 activates a pre-installed traffic management rule initially as said traffic management rule.

As another option, the communication module 11 receives an activation command including an identification of a pre-installed traffic management rule. Subsequently, the control module 12 activates said pre-installed traffic management rule as said traffic management rule based on said identification.

As a further option, the communication module 11 receives an installation command including said traffic management rule. Subsequently, the control module 12 installs the traffic management rule, and activates said traffic management rule thereafter.

According to exemplary embodiments of the present invention, the control module 12 releases the bandwidth resources, if a predetermined period of time is elapsed after receiving a data packet matching said filter without receiving a further data packet matching said filter.

That is, when no more packets matching the filters of an installed PCC rule or QoS rule are detected by the PCEF or BBERF for a certain amount of time, the PCEF or BBERF preferably de-allocates bandwidth for the IP-CAN transport connection. The certain amount of time (i.e. the predetermined period of time) may be preconfigured information at the PCEF or BBERF. Alternatively, it may be provisioned by the PCRF. For PCC rules, the certain amount of time is preferably encoded by adding a new Diameter attribute-value-pair (AVP) within the Charging-Rule-Definition AVP. For ADC rules, the certain amount of time is preferably encoded by adding a new Diameter AVP within the QoS-Rule-Definition AVP.

According to still further embodiments of the present invention, the filter determines correspondence of at least one of a source internet protocol address, a destination internet protocol address, a source internet protocol port, a destination internet protocol port, a protocol, and a type of service of said service data flow corresponding to said data packet with respective predetermined values. The filter may further be indicative of an extended packet inspection of said data packet. Extended packet inspection involves inspecting information in protocol layers within IP and can also involve correlating information from several IP packets flowing in the same and/or opposite direction(s).

In other words, the filters of the PCC rule or QoS rule can use source and/or destination IP address and port, and/or an IP-level protocol identifier, and/or IP type-of-service (TOS) bits, as well as extended packet inspection of protocol layers within IP. Extended packet inspection based filtering might be performed as part of ADC rule processing in the PCEF, and the PCC rule filter would then select IP packets matching the ADC rule filters.

According to still further embodiments of the present invention, when reserving bandwidth resources, the control module 12 modifies settings of a bearer based on said bandwidth amount, or sets up a bearer based on said bandwidth amount. In this regard, the control module 12 may further control the communication module 11 to transmit a control message requesting bounding uplink traffic corresponding to the service data flow corresponding to said packet to said bearer.

Namely, the PCEF or BBERF preferably allocates bandwidth for the IP-CAN transport connection by modifying an existing IP-CAN bearer or by setting up a suitable new IP-CAN bearer, for instance by signalling a GBR value derived from the QoS information (i.e. the first quality of service settings) related to the PCC rule or QoS rule within the general packet radio service (GPRS) tunnelling protocol (GTP) towards the radio access network (RAN). In addition, the PCEF or BBERF may signal a traffic flow template (TFT) derived from filter information within the PCC rule or QoS rule to direct uplink traffic into the IP-CAN bearer.

According to still further embodiments of the present invention, when releasing the bandwidth resources, the control module 12 modifies settings of a bearer bound to said service data flow corresponding to said data packet. Alternatively, the control module 12 terminates a bearer bound to said service data flow corresponding to said data packet.

In other words, the PCEF or BBERF de-allocates bandwidth for the IP-CAN transport connection by modifying an existing IP-CAN bearer or by terminating a corresponding IP-CAN bearer, for instance by using the GTP towards the RAN.

According to still further embodiments of the present invention, the traffic management rule further comprises an implementation indicator indicative of whether said bandwidth resources for a transport connection associated with said service data flow are to be reserved immediately or upon a first matching of said filter. When reserving bandwidth resources, the control module 12 allocates, based on said bandwidth amount, bandwidth resources for a transport connection associated with said service data flow based on said matching result, if said implementation indicator indicates that said bandwidth resources are to be reserved upon a first matching of said filter. On the other hand, the control module 12 allocates, based on said bandwidth amount, bandwidth resources for a transport connection associated with said service data flow initially, if said implementation indicator indicates that said bandwidth resources are to be reserved immediately.

That is, the definition of PCC and/or QoS rule is extended with an indication whether to allocate bandwidth for the IP-CAN transport connection when the PCC/QoS rule is installed or when the first packet matching the filters of that PCC/QoS rule is detected by the PCEF/BBERF. This indication may be part of the preconfigured information of a preconfigured PCC rule at the PCRF or of a preconfigured QoS rule at the BBERF. Alternatively, the PCRF instructs the PCEF/BBERF for a PCC/QoS rule whether to allocate bandwidth for the IP CAN transport connection when the PCC/QoS rule is installed or when the first packet matching the filters of that PCC/QoS rule is detected by the PCEF/BBERF.

For a PCC/QoS rule that is installed based on AF-provided information, it may be preferable for the PCRF to instruct the PCEF/BBERF to immediately allocate bandwidth. On the other hand, for other PCC/QoS rules requiring a QoS class with GBR bandwidth assignment, it may be preferable for the PCRF to instruct the PCEF/BBERF to allocate bandwidth for the IP-CAN transport connection when the first packet matching the filters of that PCC/QoS rule is detected by the PCEF/BBERF.

The instruction whether to allocate bandwidth for the IP-CAN transport connection when the PCC rule is installed or when the first packet matching the filters of that PCC rule is detected by the PCEF is preferably encoded by adding a new Diameter AVP within the Charging-Rule-Definition AVP. The instruction whether to allocate bandwidth for the IP-CAN transport connection when the QoS rule is installed or when the first packet matching the filters of that QoS rule is detected by the BBERF is preferably encoded by adding a new Diameter AVP within the QoS-Rule-Definition AVP.

According to still further embodiments of the present invention, the traffic management rule further comprises second quality of service settings. In this case, the control module 12 initially applies (i.e. when the respective rule is installed or activated) said second quality of service settings to a service data flow that matches said filter. In addition, when releasing the bandwidth resources after those bandwidth resources have been reserved due to e.g. filter match, the control module 12 re-applies the second quality of service settings to a service data flow that matches said filter.

In other words, the definition of a PCC and/or QoS rule is extended with a second set of QoS information (i.e. second quality of service settings). The second set of QoS information is applicable before the first packet matching the filters of that PCC/QoS rule is detected by the PCEF/BBERF and possibly after no more packets matching the filters of that PCC/QoS rule have been detected for a certain amount of time. Further, the first set of QoS information is applicable while packets matching the filters of that PCC/QoS rule are being detected by the PCEF/BBERF.

The second set of QoS information preferably has a non-GBR QoS class and a lower QoS class than the first set of QoS information in order to avoid, that costly transport resources are permanently allocated.

The first set of QoS information may be part of the preconfigured information of a preconfigured PCC rule at the PCRF or of a preconfigured QoS rule at the BBERF. Alternatively, the PCRF provides this first set of QoS information to the PCEF/BBERF.

For a PCC rule, the first set of QoS information is preferably encoded by adding a new Diameter AVP within the Charging-Rule-Definition AVP. For a QoS rule, the first set of QoS information is preferably encoded by adding a new Diameter AVP within the QoS-Rule-Definition AVP. Preferably, the new AVP has a similar structure as the QoS-Information AVP.

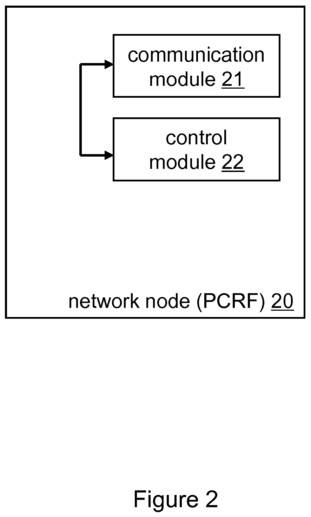

Figure 2 is a block diagram illustrating an apparatus according to exemplary embodiments of the present invention.

As shown in Figure 2, according to exemplary embodiments of the present invention, the apparatus is a network node 20 (e.g. a PCRF) comprising a communication module 21 and a control module 22. While the communication module 21 may communicate in a network, the control module manages application of a traffic management rule (e.g. a PCC rule or a QoS rule) comprising a filter and first quality of service settings including a bandwidth amount.

According to those exemplary embodiments, the traffic management rule further comprises an implementation indicator indicative of whether bandwidth resources for a transport connection associated with said service data flow are to be reserved immediately or upon a first matching of said filter.

This indicator (indication) may be part of the preconfigured information of a preconfigured PCC rule or QoS rule. Alternatively, the network node 20 (i.e. the PCRF) transmits an instruction for a PCC/QoS rule whether to allocate bandwidth for an IP-CAN transport connection when the PCC/QoS rule is installed or when the first packet matching the filters of that PCC/QoS rule is detected.

For a PCC/QoS rule that is installed based on AF-provided information, it may be preferable for the PCRF to transmit an instruction to immediately allocate bandwidth. On the other hand, for other PCC/QoS rules requiring a QoS class with GBR bandwidth assignment, it may be preferable for the PCRF to transmit an instruction to allocate bandwidth for the IP-CAN transport connection when the first packet matching the filters of that PCC/QoS rule is detected.

The instruction whether to allocate bandwidth for the IP-CAN transport connection when the PCC rule is installed or when the first packet matching the filters of that PCC rule is detected is preferably encoded by adding a new Diameter AVP within the Charging-Rule-Definition AVP. The instruction whether to allocate bandwidth for the IP-CAN transport connection when the QoS rule is installed or when the first packet matching the filters of that QoS rule is detected is preferably encoded by adding a new Diameter AVP within the QoS-Rule-Definition AVP.

According to exemplary embodiments of the present invention, the management of application of a traffic management rule can be performed in several ways.

As one option, the control module 22 generates an activation command including an identification of a pre-installed traffic management rule. Subsequently, the communication module 21 transmits said activation command.

As another option, the control module 22 generates an installation command including said traffic management rule. Subsequently, the communication module 21 transmits said installation command.

According to further embodiments of the present invention, the filter may determine correspondence of at least one of a source internet protocol address, a destination internet protocol address, a source internet protocol port, a destination internet protocol port, a protocol, and a type of service of a service data flow corresponding to a data packet with respective predetermined values. Further, the filter may be indicative of an extended packet inspection of a data packet. Extended packet inspection involves inspecting information in protocol layers within IP and can also involve correlating information from several IP packets flowing in the same and/or opposite direction(s).

In other words, the filters of the PCC rule or QoS rule is based on source and/or destination IP address and port, and/or an IP-level protocol identifier, and/or IP TOS bits, as well as extended packet inspection of protocol layers within IP.

According to still further embodiments of the present invention, the traffic management rule further comprises second quality of service settings.

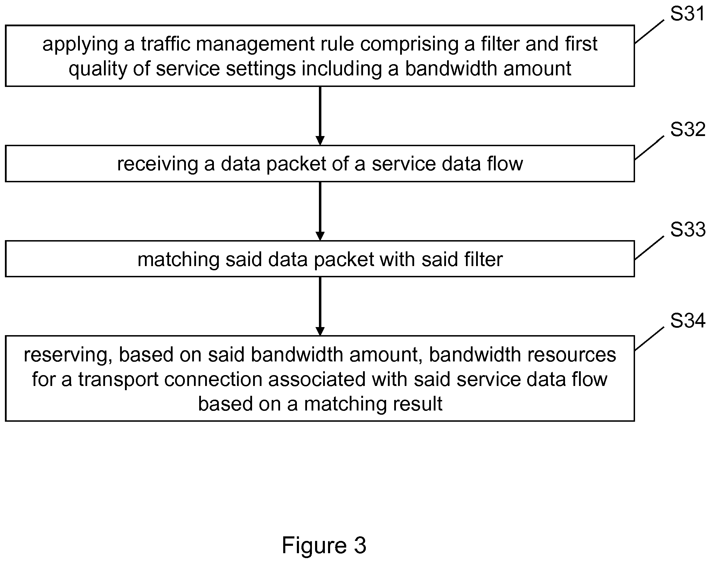

Figure 3 is a schematic diagram of a procedure according to exemplary embodiments of the present invention.

As shown in Figure 3, a procedure according to exemplary embodiments of the present invention comprises an operation of applying a traffic management rule comprising a filter and first quality of service settings including a bandwidth amount, an operation of receiving a data packet of a service data flow, an operation of matching said data packet with said filter, and an operation of reserving, based on said bandwidth amount, bandwidth resources for a transport connection associated with said service data flow based on a matching result.

According to a variation of the procedure shown in Figure 3, exemplary details of the applying operation are given, which are inherently independent from each other as such.

The exemplary applying operation according to exemplary embodiments of the present invention may comprise an operation of initially activating a pre-installed traffic management rule as said traffic management rule, or an operation of receiving an activation command including an identification of a pre-installed traffic management rule and an operation of activating said pre-installed traffic management rule as said traffic management rule based on said identification, or an operation of receiving an installation command including said traffic management rule, an operation of installing said traffic management rule and an operation of activating said traffic management rule (initially activating OR (receiving AND activating) OR (receiving, installing AND activating)).

According to a variation of the procedure shown in Figure 3, exemplary additional operations are given, which are inherently independent from each other as such. According to such variation, an exemplary method according to exemplary embodiments of the present invention may comprise an operation of releasing said bandwidth resources, if a predetermined period of time is elapsed after receiving a data packet matching said filter without receiving a further data packet matching said filter.

According to further exemplary embodiments of the present invention, said filter determines correspondence of at least one of a source internet protocol address, a destination internet protocol address, a source internet protocol port, a destination internet protocol port, a protocol, and a type of service of said service data flow corresponding to said data packet with respective predetermined values.

According to further exemplary embodiments of the present invention, said filter is indicative of an extended packet inspection of said data packet.

According to a variation of the procedure shown in Figure 3, exemplary details of the reserving operation are given, which are inherently independent from each other as such. Such exemplary reserving operation according to exemplary embodiments of the present invention may comprise an operation of modifying settings of a bearer based on said bandwidth amount, or an operation of setting up a bearer based on said bandwidth amount, and/or an operation of transmitting a control message requesting bounding uplink traffic corresponding to said service data flow corresponding to said packet to said bearer.

According to a variation of the procedure shown in Figure 3, exemplary details of the releasing operation are given, which are inherently independent from each other as such.

Such exemplary releasing operation according to exemplary embodiments of the present invention may comprise an operation of modifying settings of a bearer bound to said service data flow corresponding to said data packet, or an operation of terminating a bearer bound to said service data flow corresponding to said data packet.

According to further exemplary embodiments of the present invention, said traffic management rule further comprises an implementation indicator indicative of whether said bandwidth resources for a transport connection associated with said service data flow are to be reserved immediately or upon a first matching of said filter. According to such embodiments, exemplary additional operations are given, which are inherently independent from each other as such. An exemplary method according to exemplary embodiments of the present invention may comprise an operation of allocating, based on said bandwidth amount, bandwidth resources for a transport connection associated with said service data flow based on said matching result, if said implementation indicator indicates that said bandwidth resources are to be reserved upon a first matching of said filter, and an operation of allocating, based on said bandwidth amount, bandwidth resources for a transport connection associated with said service data flow initially, if said implementation indicator indicates that said bandwidth resources are to be reserved immediately.

According to further exemplary embodiments of the present invention, said traffic management rule further comprises second quality of service settings. According to such embodiments, exemplary additional operations and details of the releasing operation are given, which are inherently independent from each other as such. According to such variation, an exemplary method according to exemplary embodiments of the present invention may comprise an operation of applying initially said second quality of service settings to a service data flow that matches said filter. Such exemplary releasing operation according to exemplary embodiments of the present invention may further comprise an operation of re-applying said second quality of service settings to a service data flow that matches said filter.

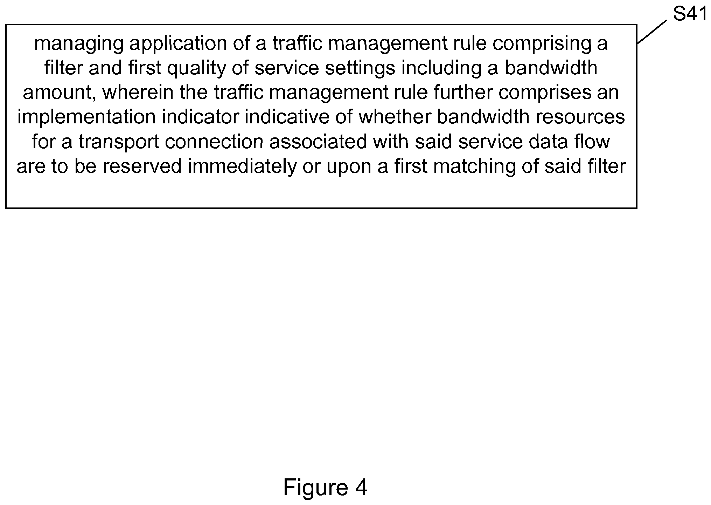

Figure 4 is a schematic diagram of a procedure according to exemplary embodiments of the present invention.

As shown in Figure 4, a procedure according to exemplary embodiments of the present invention comprises an operation of managing application of a traffic management rule comprising a filter and first quality of service settings including a bandwidth amount.

According to those exemplary embodiments, the traffic management rule further comprises an implementation indicator indicative of whether bandwidth resources for a transport connection associated with said service data flow are to be reserved immediately or upon a first matching of said filter.

According to a variation of the procedure shown in Figure 4, exemplary details of the managing operation are given, which are inherently independent from each other as such.

The exemplary managing operation according to exemplary embodiments of the present invention may comprise an operation of generating an activation command including an identification of a pre-installed traffic management rule and an operation of transmitting said activation command, or an operation of generating an installation command including said traffic management rule and an operation of transmitting said installation command ((generating AND transmitting) OR (generating AND transmitting)).

According to further exemplary embodiments of the present invention, said filter determines correspondence of at least one of a source internet protocol address, a destination internet protocol address, a source internet protocol port, a destination internet protocol port, a protocol, and a type of service of a service data flow corresponding to a data packet with respective predetermined values. According to still further exemplary embodiments of the present invention, said filter is indicative of an extended packet inspection of a data packet with a respective predetermined value.

According to further exemplary embodiments of the present invention, said traffic management rule further comprises second quality of service settings.

The above-described procedures and functions may be implemented by respective functional elements, processors, or the like, as described below.

In the foregoing exemplary description of the network entity, only the units that are relevant for understanding the principles of the invention have been described using functional blocks. The network entity may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus, i.e. network node (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

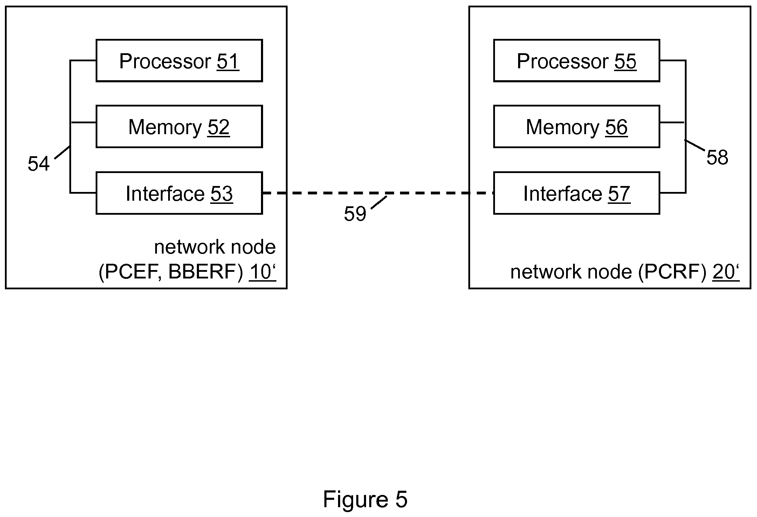

In Figure 5, an alternative illustration of apparatuses according to exemplary embodiments of the present invention is depicted. As indicated in Figure 5, according to exemplary embodiments of the present invention, the apparatus (network node) 10' (corresponding to the network node 10) comprises a processor 51, a memory 52 and an interface 53, which are connected by a bus 54 or the like. Further, according to exemplary embodiments of the present invention, the apparatus (network node) 20' (corresponding to the network node 20) comprises a processor 55, a memory 56 and an interface 57, which are connected by a bus 58 or the like, and the apparatuses may be connected via link 59, respectively.

The processor 51/55 and/or the interface 53/57 may also include a modem or the like to facilitate communication over a (hardwire or wireless) link, respectively. The interface 53/57 may include a suitable transceiver coupled to one or more antennas or communication means for (hardwire or wireless) communications with the linked or connected device(s), respectively. The interface 53/57 is generally configured to communicate with at least one other apparatus, i.e. the interface thereof.

The memory 52/56 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to exemplary embodiments of the present invention, an apparatus representing the network node 10 comprises at least one processor 51, at least one memory 52 including computer program code, and at least one interface 53 configured for communication with at least another apparatus. The processor (i.e. the at least one processor 51, with the at least one memory 52 and the computer program code) is configured to perform applying a traffic management rule comprising a filter and first quality of service settings including a bandwidth amount (thus the apparatus comprising corresponding means for applying), to perform receiving a data packet of a service data flow (thus the apparatus comprising corresponding means for receiving), to perform matching said data packet with said filter (thus the apparatus comprising corresponding means for matching), and to perform reserving, based on said bandwidth amount, bandwidth resources for a transport connection associated with said service data flow based on a matching result (thus the apparatus comprising corresponding means for reserving).

Further, according to exemplary embodiments of the present invention, an apparatus representing the network node 20 comprises at least one processor 55, at least one memory 56 including computer program code, and at least one interface 57 configured for communication with at least another apparatus. The processor (i.e. the at least one processor 55, with the at least one memory 56 and the computer program code) is configured to perform managing application of a traffic management rule comprising a filter and first quality of service settings including a bandwidth amount (thus the apparatus comprising corresponding means for managing) while communicating in a network (thus the apparatus comprising corresponding means for communicating).

For further details regarding the operability/functionality of the individual apparatuses, reference is made to the above description in connection with any one of Figures 1 to 4, respectively.

For the purpose of the present invention as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for event based quality of service adjustment. Such measures exemplarily comprise applying a traffic management rule comprising a filter and first quality of service settings including a bandwidth amount, receiving a data packet of a service data flow, matching said data packet with said filter, and reserving, based on said bandwidth amount, bandwidth resources for a transport connection associated with said service data flow based on a matching result.

### List of acronyms and abbreviations

- 3GPP: 3^{rd} Generation Partnership Project
- ADC: application detection and control
- AF: application function
- AVP: attribute-value-pair
- BBERF: bearer binding and event reporting function
- GBR: guaranteed bit rate
- GPRS: general packet radio service
- GTP: GPRS tunnelling protocol
- HTTP: hypertext transfer protocol
- IMS: IP multimedia subsystem
- IP: internet protocol
- IP-CAN: IP connectivity access network
- OCS: online charging system
- PCC: policy and charging control
- PCEF: policy and charging enforcement function
- PCRF: policy and charging control function
- P-CSCF: proxy call session control function
- QoS: quality of service
- RAN: radio access network
- SIP: session initiation protocol
- TCP: transmission control protocol
- TDF: traffic detection function
- TFT: traffic flow template
- TOS: type-of-service
- UDP: user datagram protocol
- UE: user equipment

## Claims

1. A method, comprising
applying (S31) a traffic management rule comprising a filter and first quality of service settings including a bandwidth amount, and
receiving (S32) a data packet of a service data flow,
**characterized in**
matching (S33) said data packet with said filter,
reserving (S34), based on said bandwidth amount, bandwidth resources for potential future data packets of a transport connection associated with said service data flow based on a matching result, and
releasing said bandwidth resources, if a predetermined period of time is elapsed after receiving (S32) a data packet matching said filter without receiving a further data packet matching said filter.

2. The method according to claim 1, wherein
said applying (S31) said traffic management rule includes
initially activating a pre-installed traffic management rule as said traffic management rule,
or
receiving an activation command including an identification of a pre-installed traffic management rule, and activating said pre-installed traffic management rule as said traffic management rule based on said identification,
or
receiving an installation command including said traffic management rule, installing said traffic management rule, and activating said traffic management rule.

3. The method according to claim 1 or 2, wherein
said filter determines correspondence of at least one of a source internet protocol address, a destination internet protocol address, a source internet protocol port, a destination internet protocol port, a protocol, and a type of service of said service data flow corresponding to said data packet with respective predetermined values, and/or
said filter is indicative of an extended packet inspection of said data packet.

4. The method according to any of claims 1 to 3, wherein
said reserving (S34) comprises
modifying settings of a bearer based on said bandwidth amount, or
setting up a bearer based on said bandwidth amount, and/or
transmitting a control message requesting bounding uplink traffic corresponding to said service data flow corresponding to said packet to said bearer.

5. The method according to any of claims 1 to 4, wherein
said releasing comprises
modifying settings of a bearer bound to said service data flow corresponding to said data packet, or
terminating a bearer bound to said service data flow corresponding to said data packet.

6. The method according to any of claims 1 to 5, wherein
said traffic management rule further comprises an implementation indicator indicative of whether said bandwidth resources for a transport connection associated with said service data flow are to be reserved immediately or upon a first matching of said filter, wherein
said reserving (S34) further comprises
allocating, based on said bandwidth amount, bandwidth resources for a transport connection associated with said service data flow based on said matching result, if said implementation indicator indicates that said bandwidth resources are to be reserved upon a first matching of said filter, and
allocating, based on said bandwidth amount, bandwidth resources for a transport connection associated with said service data flow initially, if said implementation indicator indicates that said bandwidth resources are to be reserved immediately.

7. The method according to any of claims 1 to 6, wherein
said traffic management rule further comprises second quality of service settings,
said method further comprising
applying initially said second quality of service settings to a service data flow that matches said filter, and wherein
said releasing comprises
re-applying said second quality of service settings to a service data flow that matches said filter.

8. An apparatus (10), comprising
a communication module (11) configured to communicate in a network,
a control module (12) configured to apply a traffic management rule comprising a filter and first quality of service settings including a bandwidth amount, and
a packet reception module (13) configured to receive a data packet of a service data flow,
**characterized in**
a rule handling module (14) configured to match said data packet with said filter,
wherein said control module (12) is further configured to
reserve, based on said bandwidth amount, bandwidth resources for potential future data packets of a transport connection associated with said service data flow based on a matching result, and to
release said bandwidth resources, if a predetermined period of time is elapsed after receiving (S32) a data packet matching said filter without receiving a further data packet matching said filter.

9. A computer program product comprising computer-executable computer program code which, when the program is run on a computer, is configured to cause the computer to carry out the method according to any one of claims 1 to 7.

10. The computer program product according to claim 9, wherein the computer program product comprises a computer-readable medium on which the computer-executable computer program code is stored, and/or wherein the program is directly loadable into an internal memory of the processor.

## Patentansprüche

1. Verfahren, das Folgendes umfasst
Anwenden (S31) einer Verkehrsverwaltungsregel, die ein Filter und erste Dienstqualitätseinstellungen, die eine Bandbreitenmenge beinhalten, umfasst, und
Empfangen (S32) eines Datenpakets eines Dienstdatenstroms,
**gekennzeichnet durch**
Abgleichen (S33) des Datenpakets mit dem Filter,
Reservieren (S34) von Bandbreitenressourcen für potenzielle künftige Datenpakete einer Transportverbindung, die mit dem Dienstdatenstrom verknüpft ist, auf Basis der Bandbreitenmenge und auf Basis eines Abgleichergebnisses, und
Freigeben der Bandbreitenressourcen, wenn nach Empfangen (S32) eines Datenpakets, das mit dem Filter übereinstimmt, ohne ein weiteres mit dem Filter übereinstimmendes Datenpaket zu empfangen, eine vorbestimmte Zeitperiode vergangen ist.

2. Verfahren nach Anspruch 1, wobei
das Anwenden (S31) der Verkehrsverwaltungsregel Folgendes beinhaltet
anfängliches Aktivieren einer vorinstallierten Verkehrsverwaltungsregel als die Verkehrsverwaltungsregel,
oder
Empfangen eines Aktivierungsbefehls, der eine Identifikation einer vorinstallierten Verkehrsverwaltungsregel beinhaltet, und Aktivieren der vorinstallierten Verkehrsverwaltungsregel auf Basis der Identifikation als die Verkehrsverwaltungsregel,
oder
Empfangen eines Installationsbefehls, der die Verkehrsverwaltungsregel beinhaltet, Installieren der Verkehrsverwaltungsregel und Aktivieren der Verkehrsverwaltungsregel.

3. Verfahren nach Anspruch 1 oder 2, wobei
das Filter eine Entsprechung von mindestens einem einer Internetprotokollquelladresse, einer Internetprotokollzieladresse, einem Internetprotokollquellport, einem Internetprotokollzielport, einem Protokoll und einem Diensttyp des Dienstdatenstroms, der dem Datenpaket entspricht, mit jeweiligen vorbestimmten Werten bestimmt, und/oder
das Filter eine erweiterte Paketüberprüfung des Datenpakets anzeigt.

4. Verfahren nach einem der Ansprüche 1 bis 3, wobei
das Reservieren (S34) Folgendes umfasst
Modifizieren von Einstellungen eines Trägers auf Basis der Bandbreitenmenge, oder
Einrichten eines Trägers auf Basis der Bandbreitenmenge, und/oder
Übertragen einer Steuernachricht, die das Binden von Uplinkverkehr, der dem Dienstdatenstrom entspricht, der dem Paket entspricht, an den Träger anfordert.

5. Verfahren nach einem der Ansprüche 1 bis 4, wobei
das Freigeben Folgendes umfasst
Modifizieren von Einstellungen eines Trägers, der an den Dienstdatenstrom gebunden ist, der dem Datenpaket entspricht, oder
Beenden eines Trägers, der an den Dienstdatenstrom gebunden ist, der dem Datenpaket entspricht.

6. Verfahren nach einem der Ansprüche 1 bis 5, wobei
die Verkehrsverwaltungsregel ferner einen Implementierungsindikator umfasst, der anzeigt, ob die Bandbreitenressourcen für eine Transportverbindung, die mit dem Dienstdatenstrom verknüpft sind, sofort oder nach einer ersten Abgleichung des Filters zu reservieren sind, wobei
das Reservieren (S34) ferner Folgendes umfasst
Zuteilen von Bandbreitenressourcen für eine Transportverbindung, die mit dem Dienstdatenstrom verknüpft sind, auf Basis der Bandbreitenmenge und auf Basis des Abgleichergebnisses, wenn der Implementierungsindikator anzeigt, dass die Bandbreitenressourcen nach einer ersten Abgleichung des Filters zu reservieren sind, und
anfängliches Zuteilen von Bandbreitenressourcen für eine Transportverbindung, die mit dem Dienstdatenstrom verknüpft sind, auf Basis der Bandbreitenmenge, wenn der Implementierungsindikator anzeigt, dass die Bandbreitenressourcen sofort zu reservieren sind.

7. Verfahren nach einem der Ansprüche 1 bis 6, wobei
die Verkehrsverwaltungsregel ferner zweite Dienstqualitätseinstellungen umfasst,
wobei das Verfahren ferner Folgendes umfasst
anfängliches Anwenden der zweiten Dienstqualitätseinstellungen auf einen Dienstdatenstrom, der mit dem Filter übereinstimmt, und wobei
das Freigeben Folgendes umfasst
erneutes Anwenden der zweiten Dienstqualitätseinstellungen auf einen Dienstdatenstrom, der mit dem Filter übereinstimmt.

8. Vorrichtung (10), die Folgendes umfasst
ein Kommunikationsmodul (11), das dazu ausgelegt ist, in einem Netzwerk zu kommunizieren,
ein Steuermodul (12), das dazu ausgelegt ist, eine Verkehrsverwaltungsregel anzuwenden, die ein Filter und erste Dienstqualitätseinstellungen, die eine Bandbreitenmenge beinhalten, umfasst, und
ein Paketempfangsmodul (13), das dazu ausgelegt ist, ein Datenpaket eines Dienstdatenstroms zu empfangen,
**gekennzeichnet durch**
ein Regelhandhabungsmodul (14), das dazu ausgelegt ist, das Datenpaket mit dem Filter abzugleichen,
wobei das Steuermodul (12) ferner zu Folgendem ausgelegt ist
Reservieren von Bandbreitenressourcen für potenzielle künftige Datenpakete einer Transportverbindung, die mit dem Dienstdatenstrom verknüpft ist, auf Basis der Bandbreitenmenge und auf Basis eines Abgleichergebnisses, und zu Folgendem
Freigeben der Bandbreitenressourcen, wenn nach Empfangen (S32) eines Datenpakets, das mit dem Filter übereinstimmt, ohne ein weiteres mit dem Filter übereinstimmendes Datenpaket zu empfangen, eine vorbestimmte Zeitperiode vergangen ist.

9. Computerprogrammprodukt, das einen computerausführbaren Computerprogrammcode umfasst, der, wenn das Programm auf einem Computer läuft, dazu ausgelegt ist, den Computer zu veranlassen, das Verfahren nach einem der Ansprüche 1 bis 7 umzusetzen.

10. Computerprogrammprodukt nach Anspruch 9, wobei das Computerprogrammprodukt ein computerlesbares Medium umfasst, auf dem ein computerausführbarer Computerprogrammcode gespeichert ist, und/oder wobei das Programm direkt in einen internen Speicher des Prozessors ladbar ist.

## Revendications

1. Procédé, comprenant
l'application (S31) d'une règle de gestion de trafic comprenant un filtre et des premiers réglages de qualité de service incluant une quantité de largeur de bande, et
la réception (S32) d'un paquet de données d'un flux de données de service,
**caractérisé par**
la mise en correspondance (S33) dudit paquet de données avec ledit filtre,
la réservation (S34), sur la base de ladite quantité de largeur de bande, de ressources de largeur de bande pour de potentiels futurs paquets de données d'une connexion de transport associée audit flux de données de service sur la base d'un résultat de correspondance, et
la libération desdites ressources de largeur de bande, si une période de temps prédéterminée s'est écoulée après la réception (S32) d'un paquet de données correspondant audit filtre sans recevoir d'autre paquet de données correspondant audit filtre.

2. Procédé selon la revendication 1, dans lequel
ladite application (S31) de ladite règle de gestion de trafic inclut
l'activation initiale d'une règle de gestion de trafic pré-installée comme ladite règle de gestion de trafic,
ou
la réception d'une commande d'activation incluant une identification d'une règle de gestion de trafic pré-installée, et l'activation de ladite règle de gestion de trafic pré-installée comme ladite règle de gestion de trafic sur la base de ladite identification,
ou
la réception d'une commande d'installation incluant ladite règle de gestion de trafic, l'installation de ladite règle de gestion de trafic, et l'activation de ladite règle de gestion de trafic.

3. Procédé selon la revendication 1 ou 2, dans lequel
ledit filtre détermine la correspondance d'au moins l'un parmi une adresse de protocole Internet source, une adresse de protocole Internet de destination, un port de protocole Internet source, un port de protocole Internet de destination, un protocole, et un type de service dudit flux de données de service correspondant audit paquet de données avec des valeurs prédéterminées respectives, et/ou
ledit filtre est indicatif d'une inspection de paquet étendue dudit paquet de données.

4. Procédé selon l'une quelconque des revendications 1 à 3, dans lequel
ladite réservation (S34) comprend
la modification de réglages d'un support sur la base de ladite quantité de largeur de bande, ou
l'établissement d'un support sur la base de ladite quantité de largeur de bande, et/ou
la transmission d'un message de contrôle demandant une limitation du trafic de liaison montante correspondant audit flux de données de service correspondant audit paquet audit support.

5. Procédé selon l'une quelconque des revendications 1 à 4, dans lequel
ladite libération comprend
la modification de réglages d'un support lié audit flux de données de service correspondant audit paquet de données, ou
la terminaison d'un support lié audit flux de données de service correspondant audit paquet de données.

6. Procédé selon l'une quelconque des revendications 1 à 5, dans lequel
ladite règle de gestion de trafic comprend en outre un indicateur de mise en œuvre indicatif de si lesdites ressources de largeur de bande pour une connexion de transport associée audit flux de données de service doivent être réservées immédiatement ou lors d'une première correspondance dudit filtre, dans lequel
ladite réservation (S34) comprend en outre
l'allocation, sur la base de ladite quantité de largeur de bande, de ressources de largeur de bande pour une connexion de transport associée audit flux de données de service sur la base dudit résultat de correspondance, si ledit indicateur de mise en œuvre indique que lesdites ressources de largeur de bande doivent être réservées lors d'une première correspondance dudit filtre, et
l'allocation, sur la base de ladite quantité de largeur de bande, de ressources de largeur de bande pour une connexion de transport associée audit flux de données de service initialement, si ledit indicateur de mise en œuvre indique que lesdites ressources de largeur de bande doivent être réservées immédiatement.

7. Procédé selon l'une quelconque des revendications 1 à 6, dans lequel
ladite règle de gestion de trafic comprend en outre des seconds réglages de qualité de service,
ledit procédé comprenant en outre
l'application initiale desdits seconds réglages de qualité de service à un flux de données de service qui correspond audit filtre, et dans lequel
ladite libération comprend
la ré-application desdits seconds réglages de qualité de service à un flux de données de service qui correspond audit filtre.

8. Appareil (10), comprenant
un module de communication (11) configuré pour communiquer dans un réseau,
un module de contrôle (12) configuré pour appliquer une règle de gestion de trafic comprenant un filtre et des premiers réglages de qualité de service incluant une quantité de largeur de bande, et
un module de réception de paquet (13) configuré pour recevoir un paquet de données d'un flux de données de service,
**caractérisé par**
un module de prise en charge de règle (14) configuré pour mettre en correspondance ledit paquet de données avec ledit filtre,
dans lequel ledit module de contrôle (12) est en outre configuré pour
réserver, sur la base de ladite quantité de largeur de bande, des ressources de largeur de bande pour de potentiels futurs paquets de données d'une connexion de transport associée audit flux de données de service sur la base d'un résultat de correspondance, et pour
libérer lesdites ressources de largeur de bande, si une période de temps prédéterminée s'est écoulée après la réception (S32) d'un paquet de données correspondant audit filtre sans recevoir d'autre paquet de données correspondant audit filtre.

9. Produit de programme informatique comprenant un code de programme informatique exécutable par ordinateur qui, lorsque le programme est exécuté sur un ordinateur, est configuré pour amener l'ordinateur à effectuer le procédé selon l'une quelconque des revendications 1 à 7.

10. Produit de programme informatique selon la revendication 9, dans lequel le produit de programme informatique comprend un support lisible par ordinateur sur lequel le code de programme informatique exécutable par ordinateur est stocké, et/ou dans lequel le programme est chargeable directement dans une mémoire interne du processeur.
